# EUROPÄISCHE PATENTANMELDUNG

(11) **EP 2 933 128 A1**
(43) Veröffentlichungstag der Anmeldung: **21.10.2015**
(21) Anmeldenummer: 15165870.5
(22) Anmeldetag: 15.10.2009
(51) Int. Cl.: B60K 6/48, B60K 6/40, B60K 1/02, B60K 1/04, B60K 6/387, B60S 5/06

(54) **FAHRZEUG MIT ANTRIEBSSTRANG**

(30) Priorität: 15.10.2008 DE 102008051345
(62) Teilanmeldung aus: 09796609.7
(71) Anmelder: Getrag Ford Transmissions GmbH, 50735 Köln (DE)
(72) Erfinder: Brings, Wolfgang, 50769 Köln (DE); Huepkes, Stefan, 41748 Viersen (DE); Kather, Lutz, 53909 Zülpich (DE); Kniesburges, Stefan, 50259 Pulheim (DE); Leibbrandt, Martin, 50181 Bedburg (DE); Najork, Rolf, 50678 Köln (DE); Nasdal, Roland, 50226 Frechen (DE); Schmitz, Harald, 44225 Dortmund (DE); Steinberg, Ingo, 50679 Köln (DE)
(74) Vertreter: Albiger, Jonas

(57) **Zusammenfassung**

Die Erfindung betrifft ein Fahrzeug mit einem Antriebsstrang, der einen Verbrennungsmotor, eine E-Maschine, die als Generator, Elektromotor und als Primärantrieb einsetzbar ist, und ein Getriebe aufweist, wobei das Getriebe eine erste Getriebestufe i_{I} und eine der ersten Getriebestufe i_{I} nachgeschaltete zweite Getriebestufe i_{II}, ein Differential zum Drehzahlausgleich bei Kurvenfahrt, eine erste Kupplung (K1) und eine zweite Kupplung (K2) umfasst, wobei die erste Kupplung in einer offenen Stellung den Verbrennungsmotor von der ersten Getriebestufe i_{I} und der E-Machine getriebetechnisch trennt, und wobei die zweite Kupplung in einer offenen Stellung den Verbrennungsmotor und die E-Maschine von der ersten Getriebestufe i_{I} getriebetechnisch trennt.

## Beschreibung

### Beschreibung

Die Erfindung betrifft ein Fahrzeug mit einem Antriebsstrang, der zumindest einen ersten Motor und ein Rad aufweist, wobei durch den Antriebsstrang ein Drehmoment von dem ersten Motor auf das Rad übertragbar ist und wobei wenigstens eine erste Einheit des Antriebsstranges mit einer Schnittstelle verbunden ist, durch die eine einfache und schnelle Austauschbarkeit dieser Einheit ermöglicht ist.

Aus dem Stand der Technik ist bekannt, ein Fahrzeug, bei dem der erste Motor als Elektromaschine ausgebildet ist, über die Schnittstelle einen entladenen Akkumulator, der zum Speichern von elektrischer Energie dient, gegen einen aufgeladenen Akkumulator schnell und einfach auszutauschen. Dadurch können längere Stillstandszeiten des Fahrzeugs vermieden werden, die ansonsten notwendig sind, den im Fahrzeug eingebauten Akkumulator durch eine externe Stromquelle aufzuladen.

Obwohl die einfache und schnelle Austauschbarkeit von Akkumulatoren eine Möglichkeit darstellen, die Reichweite von mit Elektromaschinen betriebenen Fahrzeugen ohne längere Stillstandszeiten zu erhöhen, besteht weiter der Bedarf, Fahrzeuge weiterzuentwickeln, so dass sie hinsichtlich Reichweite, Fahrkomfort und/oder Energiezufuhr Vorteile aufweisen.

Die der Erfindung zugrunde liegende Aufgabe wird mit der Merkmalskombination gemäß Anspruch 1 gelöst. Bevorzugte Ausführungsbeispiele können den Unteransprüchen entnommen werden.

Gemäß Patentanspruch 1 zeichnet sich das Fahrzeug dadurch aus, dass die Schnittstelle so ausgelegt ist, mit einer zweiten, von der ersten Einheit verschiedenen Einheit verbunden zu werden, wobei beide Einheiten ausgelegt sind, elektrische Energie zu speichern, chemisch gebundene Energie in Rotationsenergie umzuwandeln, elektrische Energie in Rotationsenergie umzuwandeln und/oder Rotationsenergie in elektrische Energie umzuwandeln. Die erste Einheit ist dabei von der zweiten Einheit verschieden.

Beispielsweise kann die erste Einheit ein Akkumulator sein, während die zweite Einheit eine Maschine zur Erzeugung von Rotationsenergie umfasst. Diese Maschine kann beispielsweise ein Verbrennungsmotor oder eine Elektromaschine sein.

Weist beispielsweise das Fahrzeug eine Elektromaschine als ersten Motor auf, besteht somit die Möglichkeit, über die Schnittstelle entweder den Akkumulator oder die zweite Einheit mit dem Fahrzeug bzw. mit dem Antriebsstrang zu verbinden, um so mit dem Einbau der zweiten Einheit beispielsweise mehr Antriebsleistung dem Fahrzeug zur Verfügung zu stellen. Auch kann durch den Austausch des Akkumulators durch die zweite, den Verbrennungsmotor umfassende Einheit die Reichweite des Fahrzeugs erhöht werden.

Geht man beispielsweise von dem Ausführungsbeispiel aus, bei dem über die Schnittstelle einerseits ein Akkumulator und andererseits ein Verbrennungsmotor an den Antriebsstrang angekoppelt werden kann, so weist bevorzugt die Schnittstelle einen Anschluss zur Übertragung elektrischer Energie und einen Anschluss zur Übertragung von Rotationsenergie auf. In diesem Fall könnte der Verbrennungsmotor direkt mit dem Antriebsstrang gekoppelt werden, d.h. der Verbrennungsmotor gibt direkt Drehmoment über den Antriebsstrang an das Rad ab. Es besteht jedoch auch die Möglichkeit, dass die zweite Einheit einen elektrischen Generator umfasst, der von dem Verbrennungsmotor angetrieben wird. In diesem Fall würde es ausreichen, dass die Schnittstelle, abgesehen von etwaigen weiteren Nebenanschlüssen, lediglich einen Anschluss zur Übertragung elektrischer Energie aufweist, durch die entweder Strom vom Akkumulator oder Strom von dem Generator übertragen werden kann.

Die zweite Einheit kann auch eine Brennstoffzelle und einen Elektromotor aufweisen.

Vorzugsweise sind die erste Einheit und die zweite Einheit derart voneinander unterschiedlich, dass die erste Einheit ausgelegt ist, lediglich elektrisch Energie zu speichern, abzugeben und/oder aufzunehmen, während die zweite Einheit chemisch gebundene Energie in Rotationsenergie umwandelt, wie dies beispielsweise bei einem Verbrennungsmotor der Fall ist, bei dem die im Kraftstoff enthaltene Energie in Wärme und dann in Rotationsenergie umgewandelt wird. Die Verschiedenheit der ersten und zweiten Einheit kann sich jedoch auch darin erschöpfen, dass bei der ersten Einheit beispielsweise elektrische Energie in Rotationsenergie umgewandelt wird, während bei der zweiten Einheit besagte chemisch gebundene Energie in Rotationsenergie umgewandelt wird. Auch kann sich die Verschiedenheit zwischen der ersten und zweiten Einheit dadurch begründen, dass die erste Einheit lediglich die Möglichkeit eröffnet, über einen Verbrennungsmotor chemisch gebundene Energie in Rotationsenergie umzuwandeln, während die zweite Einheit neben diesem Verbrennungsmotor noch einen Generator aufweist, durch den Rotationsenergie, sei es aus dem Verbrennungsmotor oder von einer anderen Quelle aus dem Antriebsstrang, in elektrische Energie umwandelt.

Einer der beiden Einheiten bzw. auch beide Einheiten können einen Kraftstofftank und eine Abgasanlage umfassen, so dass die entsprechende Einheit als autarke Einheit anzusehen ist, die lediglich über den Anschluss zur Übertragung von Rotationsenergie an das Fahrzeug bzw. den Antriebsstrang anzukoppeln ist. Es ist jedoch auch möglich, die Schnittstelle derart auszubilden, dass sie eine Kraftstoffzufuhr ermöglicht, so dass Kraftstofftank und entsprechende Einheit voneinander getrennt sein können. Das Gleiche gilt sinngemäß für die Abgasanlage. Auch hier ist es denkbar, dass die Schnittstelle einen Anschluss umfasst, durch den Abgas der entsprechenden Einheit zu einer im Fahrzeug fest installierten Abgasanlage geführt wird.

Vorzugsweise sind die erste Einheit und die zweite Einheit vollautomatisch mit der Schnittstelle koppelbar. Zweckmäßig lassen sich die Einheiten auch vollautomatisch von der Schnittstelle abkoppeln oder entfernen. In einem bevorzugten Ausführungsbeispiel sind die erste Einheit und die zweite Einheit von einer Unterseite des Fahrzeugs her mit der Schnittstelle koppelbar. So könnte beispielsweise das Fahrzeug auf eine Vorrichtung geführt werden, durch die die im Fahrzeug eingebaute erste Einheit vollautomatisch von unten entfernt wird und dann in einem zweiten Schritt eine neue zweite Einheit von unten her über die Schnittstelle mit dem Fahrzeug gekoppelt wird. Dadurch können die Zeiten zum Austausch der Einheiten minimiert werden, ohne dass dabei der Fahrzeugführer das Fahrzeug verlassen muss.

Vorzugsweise weist die Schnittstelle Schnellanschlüsse oder Steckanschlüsse auf, die sich besonders einfach trennen und schließen lassen.

Der Antriebsstrang kann ein Getriebe mit wenigstens einer ersten Kupplung umfassen, durch die eine Elektromaschine von dem Rad getriebetechnisch getrennt werden kann. Das Getriebe kann auch eine zweite Kupplung umfassen, durch die ein Verbrennungsmotor von dem Rad getriebetechnisch getrennt werden kann. Beispielsweise ist bei geöffneter zweiter Kupplung möglich, im Stillstand des Fahrzeugs den Verbrennungsmotor laufen zu lassen, um über einen Generator einen Akkumulator zu beladen. Des Weiteren kann das Getriebe weitere Kupplungen umfassen, durch die Elektromaschine und Verbrennungsmaschine für verschiedene Betriebsarten miteinander verschaltet werden können. Beispielsweise ist es somit möglich, den Verbrennungsmotor für besonders starke Beschleunigungsvorgänge neben der Elektromaschine einzusetzen, während bei normaler Fahrt der Verbrennungsmotor lediglich dazu dient, über Rotationsenergie elektrische Energie für den Antrieb der Elektromaschine bereitzustellen. Somit lassen sich über das Getriebe mit den verschiedenen Kupplungen ein serieller Hybrid, ein paralleler Hybrid und Kombinationen davon realisieren.

Die Erfindung und besondere Ausführungen dieser Erfindung lassen sich auch wie folgt beschreiben:
a. Fahrzeug mit einem Antriebsstrang, der zumindest einen ersten Motor und ein Rad aufweist, wobei durch den Antriebsstrang ein Drehmoment vom ersten Motor auf das Rad übertragbar ist, und wobei wenigstens eine erste Einheit des Antriebsstrangs mit einer Schnittstelle verbunden ist, durch die eine einfache und schnelle Austauschbarkeit dieser Einheit möglich ist. Das Fahrzeug zeichnet sich dadurch aus, dass die Schnittstelle ausgelegt ist, mit einer zweiten, von der ersten Einheit verschiedenen Einheit verbunden zu werden, wobei beide Einheiten ausgelegt sind, elektrische Energie zu speichern, chemisch gebundene Energie in Rotationsenergie umzuwandeln, elektrische Energie in Rotationsenergie umzuwandeln und/oder Rotationsenergie in elektrische Energie umzuwandeln.
b. Bei dem in Absatz a beschriebenen Fahrzeug kann die erste Einheit ein Akkumulator sein. Die zweite Einheit kann einen Antrieb zur Erzeugung von Rotationsenergie umfassen.
c. Bei den in Absatz a oder b beschriebenen Fahrzeug kann die zweite Einheit einen Verbrennungsmotor umfassen.
d. Bei einem der in den Absätze a bis c beschriebenen Fahrzeugen kann die zweite Einheit eine Brennstoffzelle umfassen.
e. Bei einem der in den Absätze a bis d beschriebenen Fahrzeugen kann die zweite Einheit einen Kraftstofftank und eine Abgasanlage umfassen.
f. Bei einem der in den Absätze a bis c beschriebenen Fahrzeugen kann die Schnittstelle einen Anschluss zur Übertragung elektrischer Energie und/oder einen Anschluss zur Übertragung von Rotationsenergie aufweisen.
g. Bei einem der in den Absätze a bis e beschriebenen Fahrzeugen können die erste Einheit und die zweite Einheit vollautomatisch mit der Schnittstelle koppelbar sind und von der Schnittstelle entfernbar sein.
h. Bei einem der in den Absätze a bis f beschriebenen Fahrzeugen kann die erste Einheit und die zweite Einheit von einer Unterseite des Fahrzeugs her mit der Schnittstelle koppelbar sein.
i. Bei einem der in den Absätze a bis h beschriebenen Fahrzeugen kann der Antriebsstrang ein Getriebe mit wenigstens einer ersten Kupplung umfassen, durch die eine Elektromaschine von dem Rad getriebetechnisch getrennt werden kann.
j. Bei dem in Absatz i beschriebenen Fahrzeug kann das Getriebe eine zweite Kupplung umfassen, durch ein Verbrennungsmotor von dem Rad getriebetechnisch getrennt werden kann.

Anhand der in der Zeichnung aufgeführten Figuren wird die Erfindung näher erläutert. Es zeigen:
- Figur 1: ein Fahrzeug mit einem austauschbaren Akkumulator;
- Figur 2: das Fahrzeug der Figur 1 mit einer Einheit, die den Akkumulator ersetzt;
- Figur 3: schematisch ein erstes Ausführungsbeispiel für ein Getriebe mit möglichen Betriebszuständen (siehe Figur 3b);
- Figur 4: ein weiteres Getriebe mit möglichen Betriebszuständen (siehe Figur 4b);
- Figur 5: ein weiteres Getriebe; und
- Figur 6: ein weiteres Getriebe mit verschiedenen Betriebszuständen (siehe Figur 6b).

Bevor auf die einzelnen Figuren näher eingegangen wird, werden einzelne Aspekte der Erfindung weiter und mit anderen Worten beschrieben. So kann die Erfindung auch dahingehend interpretiert werden, dass sie eine Vorrichtung zur Erhöhung der Reichweite eines elektromotorischen und/oder eines Verbrennungsmotors betriebenen Fahrzeuges betrifft.

In modernen Fahrzeugen werden hohe Anforderungen an die Effizienz des Antriebstrangs gestellt. Um die Effizienz zu erhöhen können Hybridkonzepte im Fahrzeugbau verwendet werden. Es sind zunächst zwei klassische Konzepte bekannt. Bei einem seriellen Hybrid treibt eine Elektromaschine ein Fahrzeug an, wobei die Energiequelle eine Verbrennungskraftmaschine (VKM) bzw. eine Brennstoffzelle sein kann, die mittels eines Generators bzw. direkt elektrische Energie für die Elektromaschine erzeugt. Ein paralleler Hybrid ist dadurch gekennzeichnet, dass sowohl eine Elektromaschine als auch eine Verbrennungskraftmaschine ein Fahrzeug antreiben können.

In einem rein elektromotorischen betriebenen Fahrzeug mit Akkumulatoren als Energiespeicher ist die Reichweite des Fahrzeugs begrenzt. Zur Erhöhung der Reichweite ist es bekannt, dass eine Verbrennungskraftmaschine oder Brennstoffzelle als Energiequelle dienen kann. Eine Elektromaschine, die als Generator betrieben wird, wandelt beim Verbrennungsmotor die mechanische in elektrische Energie um. Die dadurch gewonnene elektrische Energie kann entweder direkt zum Betrieb des Elektromotors als auch in den vorhandenen Akkumulatoren gespeichert werden, so dass sie bei Bedarf zur Verfügung steht.

Es existieren somit elektrische Antriebssysteme, die entweder nur Akkumulatoren als einziger Energiespeicher haben oder die eine Verbrennungskraftmaschine / Brennstoffzelle neben den Akkumulatoren als Energiequelle haben.

Es ist wünschenswert die Reichweite eines elektromotorisch betriebenen Fahrzeugs je nach Kundenwunsch flexibel zu erweitern.

Die Erfindung ermöglicht in einem bevorzugten Ausführungsbeispiel den nachträglichen Einbau eines eigenständigen Aggregates ("Range Extender" genannt) in ein Kraftfahrzeug. Dieses Aggregat oder auch diese Einheit umfasst vorzugsweise einen Generator, die entsprechende Leistungselektronik und eine den Generator antreibende Verbrennungskraftmaschine. Alternativ kann auch eine Brennstoffzelle das eigenständige Aggregat bilden, wobei die im Fahrzeug vorhandene Leistungselektronik ein Betrieb mit der Brennstoffzelle berücksichtigen sollte. In einem weiteren Ausführungsbeispiel besteht das Aggregat aus einer Brennstoffzelle und einen Elektromotor, wobei eine mechanische Kopplung zwischen dem Elektromotor des Aggregates und dem Getriebe vorhanden ist. Es soll noch mal verdeutlich werden, dass das Aggregat eine eigenständige austauschbare Baugruppe bzw. ein eigenständiges austauschbares Modul darstellen soll. Dieses Aggregat kann an einer freien Position im Fahrzeug angeordnet werden oder kann einen Akkumulator ersetzen. Das Aggregat kann auch die Kraftstoffversorgung und die Abgasnachbehandlung der den Generator antreibenden Kraftmaschine beinhalten.

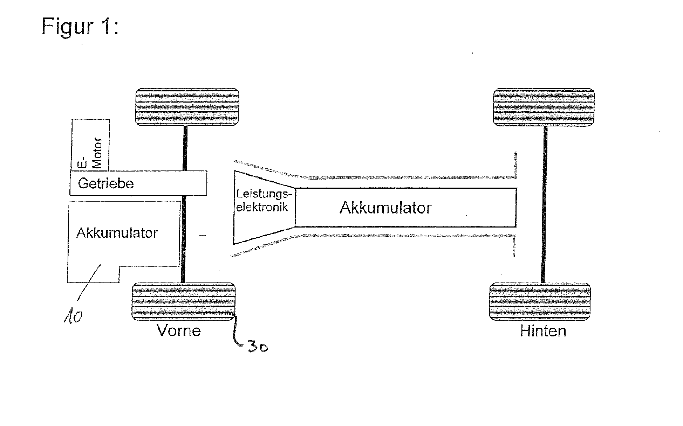

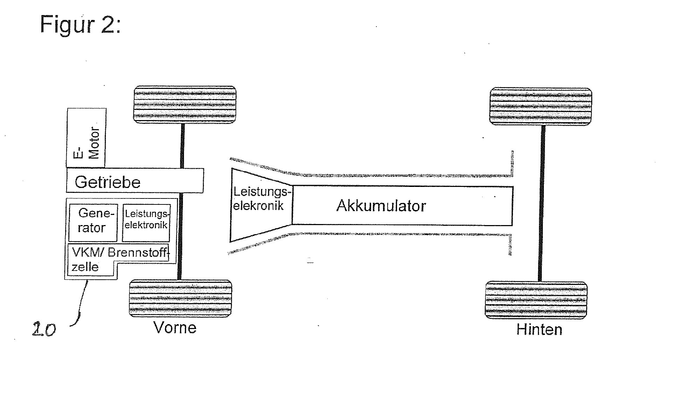

Die Figur 1 zeigt ein Fahrzeug mit elektromotorischem Antrieb. Die Figur 2 stellt die Variante mit Erhöhung der Reichweite dar, bei dem ein Akkumulator gegenüber Figur 1 durch das oben beschriebene Aggregat ersetzt worden ist.

Durch entsprechende Schnittstellen zum Fahrzeug, die elektrischer und/oder mechanischer Art sein können, ist der einfache Einbau ins Fahrzeug gewährleistet. Die Anschlüsse sind vorzugsweise auf die schnelle Austauschbarkeit optimiert, die Ausrichtung der Kontaktschilde kann mittels Zentrierhilfen erleichtert oder durch die Gehäuseform des Aggregates bzw. durch Flansche vorgegeben werden. Durch ein automatisch einklappendes Transportsystem kann der Akkumulator oder das Reichweite erhöhende Aggregat vom Kunden ohne Werkstattunterstützung selber zum Fahrzeug gebracht und installiert werden. Alternativ kann ein Auswechseln des Akkumulators durch ein Reichweite erhöhendes Aggregat und umgekehrt an der Tankstelle mittels einer Austauschvorrichtung automatisch erfolgen.

Die folgenden Ausführungen beziehen sich auf ein Getriebe, das Teil eines Antriebsstangs des Fahrzeugs sein kann. Die bezüglich des Getriebes vorgestellten Neuerungen lassen sich auch unabhängig von der oben beschriebenen Austauschbarkeit von erster und zweiter Einheit nutzen.

In einem Fahrzeug soll durch die Kombination von parallelem und seriellem Hybrid eine hohe Systemverfügbarkeit vorhanden sein. Dadurch kann ein Getriebe mit Kupplungen auf hocheffiziente Weise folgende Aufgaben erfüllen:
Ein Getriebe A kann mehrere Kraft- und Arbeitsmaschinen koppeln und trennen, ein Drehzahlausgleich bei Kurvenfahrt durchführen und ein elektromotorisches und/oder verbrennungsmotorisches Fahren sowie eine Beschleunigungsfunktion (auch "Boost-Funktion" genannt) ermöglichen. Bei Getriebe B und C ist zusätzlich ein Laden des Akkumulators durch eine im Fahrzeug befindliche Kraftmaschine während der Fahrt (als serieller Hybrid) oder auch bei stehendem Fahrzeug möglich.

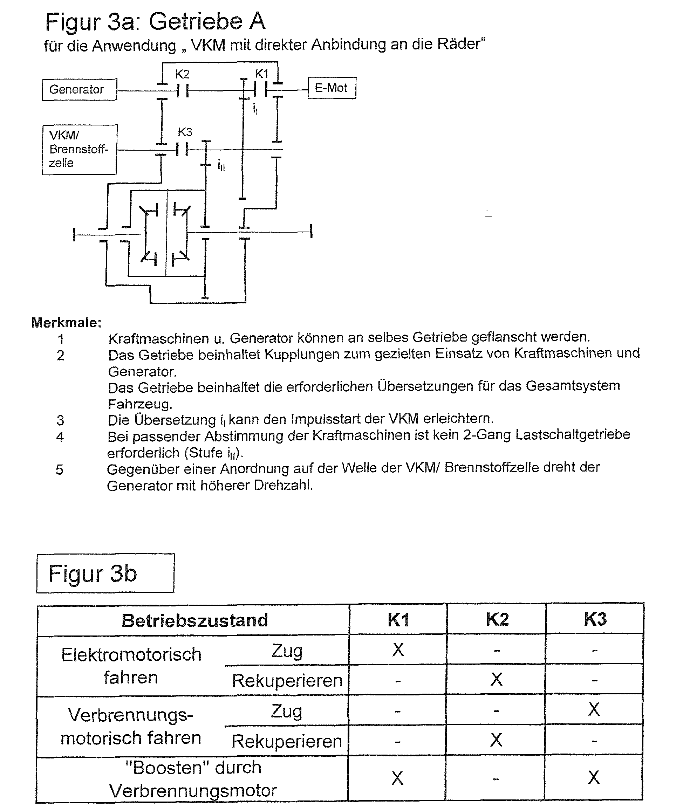

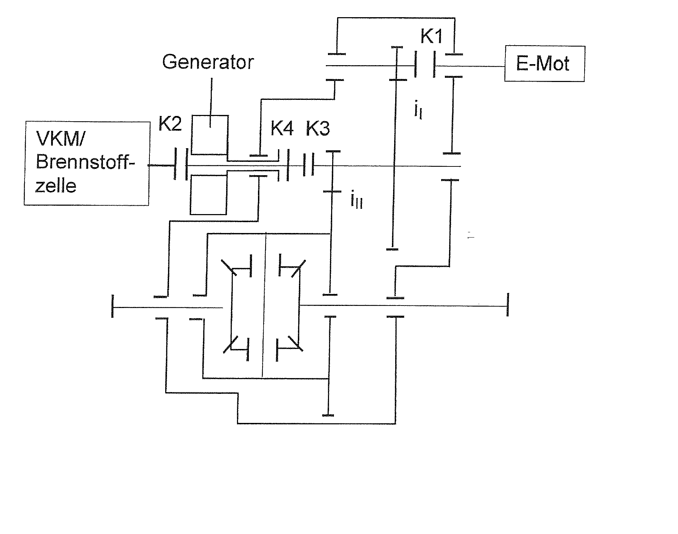

Die Figuren 3a, 4a und 5 beinhalten die Getriebe A, B und C. K1 bis K4 stellen Kupplungen dar. Getriebe B und C unterscheiden sich durch die Anordnung der Kupplung K4. Beim Getriebe B ist die Kupplung K4 außerhalb des Getriebes angeordnet. Vorteil einer äußeren Kupplung K4 kann die Nutzung einer serienmäßig vorhandenen Einscheiben-Trockenkupplung sein. Beim Getriebe C befindet sich die Kupplung K4 innerhalb des Getriebes. Ein Grund könnte bei Getriebe C die Nutzung einer nasslaufenden Kupplung K4 sein. Ein weiterer Grund könnte die Nutzung einer gemeinsamen Schaltaktuatorik für die Kupplungen K3 und K4 sein, die vorzugsweise 3 Schaltpositionen umfasst (K3 zu und K4 offen, K3 und K4 zu, K3 offen und K4 zu). Anstatt zwei einzelnen Kupplungen K3 und K4 kann alternativ eine Doppelkupplung angewendet werden, um Bauraum sparen zu können.

Die Kupplung K1 kann auch auf der Welle der Kupplung K3 angeordnet werden. Besonders vorteilhaft ist die Positionierung auf der Welle der Verbrennungskraftmaschine zwischen beiden Getriebestufen, da dann bei geöffneter Kupplung K1 auch die Getriebestufe I nicht mitgeschleppt werden muss. Dies gilt auch für die Getriebe B und C.

In allen Varianten befindet sich die Kupplung K2 außerhalb des Getriebes, um z.B. die serienmäßig vorhandene Einscheiben-Trockenkupplung zu nutzen. Technisch vorteilhaft kann auch eine Anordnung innerhalb des Getriebes, z.B. als nasslaufende Kupplung, sein.

Ist der Generator als Elektromaschine ausgeführt, die auch als Elektromotor verwendet werden kann, kann auch bei stehendem Fahrzeug die Verbrennungskraftmaschine durch die Elektromaschine angelassen werden.

In Figur 3b können die unterschiedlichen Betriebszustände des in der Figur 3a gezeigten Getriebes A betrachtet werden. Kupplungen, die geschlossen sind, sind mit "x" gekennzeichnet, offene Kupplungen dagegen mit "-". Bei einem rein elektromaschinellen Betrieb kann durch Schließen der Kupplung K1 elektromotorisch gefahren werden. Bei Schließen der Kupplung K2 kann der vorhandene Generator bei Schub rekuperieren, d.h. elektrische Energie erzeugen. Beim verbrennungsmotorischen Fahren kann mittels Schließen der Kupplung K3 Drehmoment von der Verbrennungskraftmaschine auf die Räder übertragen werden. Wiederum kann bei einer Schubsituation durch Schließen der Kupplung K2 der Generator rekuperieren. Sollte der Fahrer eine hohe Beschleunigung anfordern, so kann durch das Schließen der Kupplungen K1 und K3 ein höheres Drehmoment durch die Addition der Drehmomente der Verbrennungskraftmaschine als auch des Elektromotors auf die Räder übertragen werden.

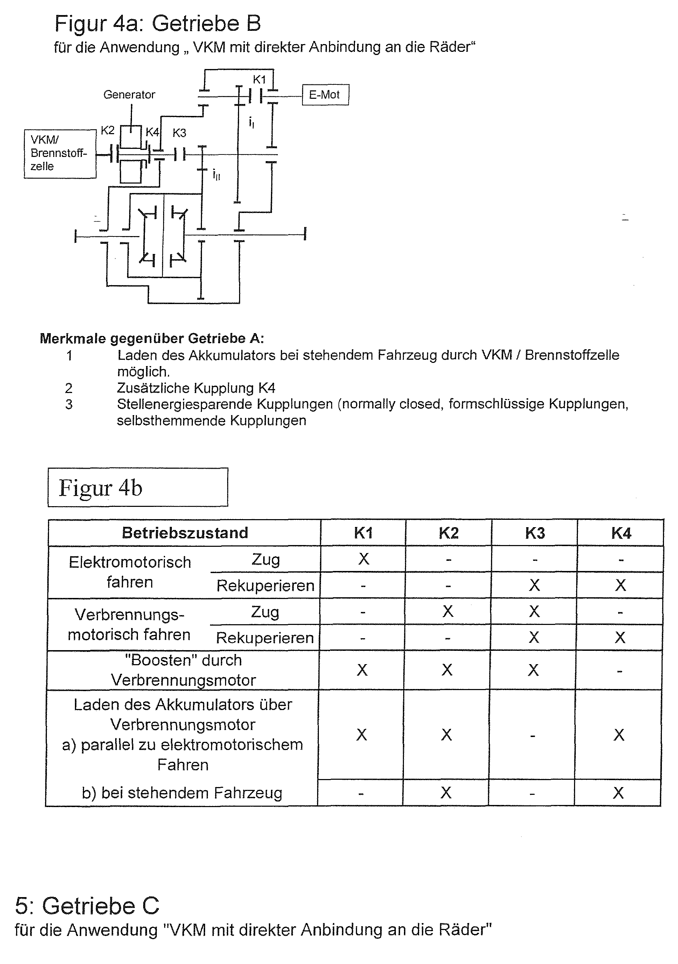

In Figur 4b können die einzelnen Betriebzustände des in der Figur 4a gezeigten Getriebes betrachtet werden. Kupplungen, die geschlossen sind, sind mit "x" gekennzeichnet, offene Kupplungen dagegen mit "-". Im Betriebszustand "Elektromotorisch Fahren" kann der Elektromotor durch das Schließen der Kupplung K1 Drehmoment auf die Räder übertragen. Im Schubbetrieb kann durch das Schließen der Kupplungen K3 und K4 der vorhandene Generator elektrische Energie erzeugen. Im Betriebszustand "Verbrennungsmotorisch fahren" kann durch die geschlossene Kupplungen K2 und K3 Drehmoment vom Verbrennungsmotor auf die Räder übertragen werden. In der Rekuperierphase wird durch das Schließen der Kupplungen K3 und K4 elektrische Energie im Generator erzeugt. Verlangt der Fahrer nach großer Beschleunigung, können die Verbrennungskraftmaschine und der Elektromotor gemeinsam durch das Schließen der Kupplungen K1, K2 und K3 Drehmoment auf die Räder übertragen. Ein weiterer Betriebszustand kann das "Laden des Akkumulators über den Verbrennungsmotor" sein, wobei der Akkumulator parallel zum elektromotorischen Fahren über das Schließen der Kupplungen K1, K2 und K4 bei einer laufenden Verbrennungskraftmaschine geladen werden kann. Steht das Fahrzeug, so kann der Akkumulator durch das Schließen der Kupplungen K2 und K4 durch die Verbrennungskraftmaschine aufgeladen werden.

Alternativ kann im Getriebe A der Elektromotor oder der Generator und dessen Kupplung am Verbrennungsmotor abgewandten Ende der Welle montiert sein, wenn keine Getriebestufe iₗ notwendig sein sollte.

Alternativ kann im Getriebe A der Generator und der Elektromotor in einer Elektromaschine zusammengefasst werden. Dadurch können auch die Kupplungen K1 und K2 in einer Kupplung zusammengefasst werden. Die Betriebszustände dieses Getriebes ändern sich zu Figur 3b so, dass alle mit "x" gekennzeichneten Stellen der Kupplungen K1 und K2 in einer gemeinsamen Kupplung übernommen werden und nur im "Zug" beim "Verbrennungsmotorisch fahren" die gemeinsame Kupplung offen ist.

Die Positionen der Elektromaschine und deren Kupplung können bei den in Figur 3a gezeigten Positionen des Generators und dessen Kupplung, des Elektromotors und dessen Kupplung oder bei der Position am Verbrennungsmotor abgewandten Ende der Welle sein.

Alternativ kann im Getriebe B der Elektromotor und dessen Kupplung am Verbrennungsmotor abgewandten Ende der Welle montiert sein, wenn keine Getriebestufe iₗ notwendig sein sollte.

Die in den Getrieben A bis C vorhandenen Elektromotoren, Generatoren und Verbrennungskraftmaschinen können Bestandteile des in der hier offenbarten Aggregates zur Erhöhung der Reichweite sein. Die weiteren Bauteile des Aggregates können durch Bauteile des Getriebes verwendet werden.

In einem Fahrzeug soll durch die Kombination von parallelem und seriellem Hybrid eine hohe Systemverfügbarkeit vorhanden sein. Im Gegensatz zu der oben beschriebenen Ausführungsbeispielen soll dies durch eine einfachere Konstruktion mit einer geringeren Bauteilzahl ermöglicht werden.

Ein Getriebe D mit Kupplungen soll auf hocheffiziente Weise folgende Aufgaben erfüllen:
Das Koppeln und Trennen mehrere Kraft- und Arbeitsmaschinen realisieren, eine Drehzahlausgleich bei Kurvenfahrt durchführen und elektromotorisches und/oder verbrennungsmotorisches Fahren sowie Beschleunigungsfunktion (auch "Boost-Funktion") ermöglichen. Zudem kann eine im Fahrzeug befindliche Kraftmaschine während der Fahrt (als serieller Hybrid) oder auch bei stehendem Fahrzeug ein Akkumulator laden.

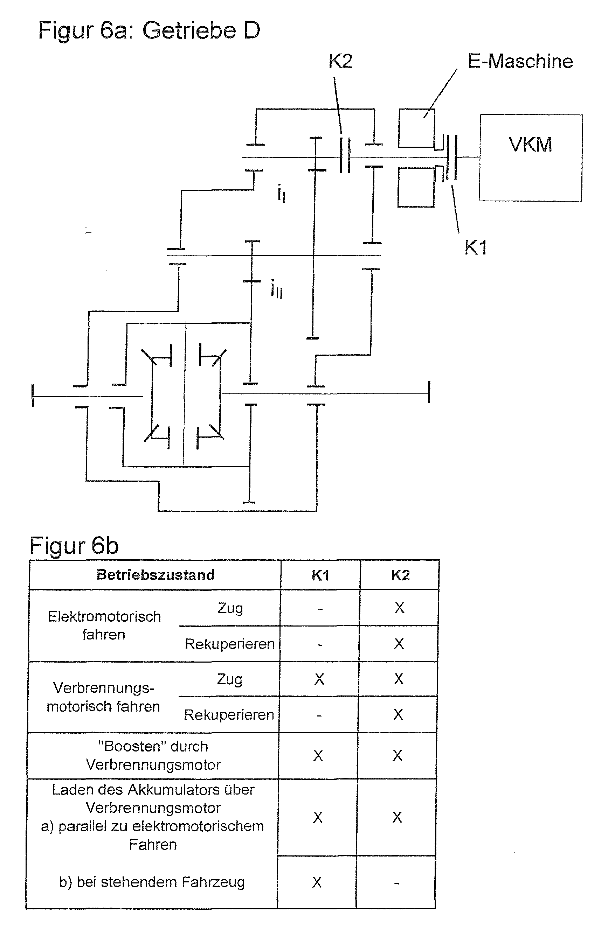

Die Figur 6a beinhaltet das Getriebe D. K1 und K2 stellen Kupplungen dar.

Die Elektromaschine kann als Generator oder als Elektromotor betrieben werden und kann als Primärantrieb dienen.

Bei Verwendung einer Elektromaschine, die im Betrieb höhere Drehzahlen als ein Verbrennungsmotor erreichen kann, kann eine Getriebestufe zwischen der Elektromaschine und dem dargestellten Getriebe erforderlich sein.

Die Übersetzung der Stufe iₗₗ ist vorzugsweise derart gewählt, dass das Fahrzeug im Bereich höherer Fahrgeschwindigkeit (beispielsweise größer als 100 km/h) auch verbrennungsmotorisch fahren kann.

Bei einer Ausführung der Stufe iₗₗ mit mindestens zwei schaltbaren Gängen kann der Verbrennungsmotor auch den Bereich kleiner Fahrgeschwindigkeit (beispielsweise kleiner als 100 km/h) abdecken. Die Schaltbarkeit kann vorzugsweise unter Last durchgeführt werden, so dass keine Zugkraftunterbrechung erfolgt.

In Figur 6b können die einzelnen Betriebzustände des in der Figur 6a gezeigten Getriebes D betrachtet werden. Kupplungen, die geschlossen sind, sind mit "x" gekennzeichnet, offene Kupplungen dagegen mit "-". Beim Zustand "Elektromotorisch fahren" kann durch Schließen der Kupplung K2 Drehmoment von der Elektromaschine auf die Räder übertragen werden. Beim Rekuperieren kann die Elektromaschine durch das Schließen der Kupplung K2 im Schubbetrieb Energie erzeugen. Im Betriebszustand "Verbrennungsmotorisch fahren" kann durch das Schließen der Kupplungen K1 und K2 Drehmoment vom Verbrennungsmotor auf die Räder übertragen werden. Beim Rekuperieren wird die Kupplung K2 geschlossen, um in der Elektromaschine Energie im Schubbetrieb erzeugen zu können. Bei Anforderungen hoher Beschleunigung durch den Fahrer können die Kupplungen K1 und K2 geschlossen werden, wobei sowohl der Verbrennungsmotor als auch der Elektromotor Drehmoment an die Räder übertragen können. Der Betriebszustand "Laden des Akkumulators über Verbrennungsmotor" kann parallel zum elektromotorischen Fahren bei Schließen der Kupplungen K1 und K2 erfolgen. Bei einem stehenden Fahrzeug kann die Kupplung K1 geschlossen werden, so dass der Verbrennungsmotor die Elektromaschine zur Energieerzeugung antreibt.

Die im Getriebe D vorhandene Elektromaschine und Verbrennungsmotor können Bestandteile des erfindungsgemäßen Konzepts sein, durch das es möglich ist, eine Einheit durch eine andere Einheit in einfacher Weise zu ersetzen, um die Charakteristik des Antriebsstrangs zu beeinflussen. Die weiteren Bauteile des Aggregates können durch Bauteile des Getriebes verwendet werden.

Figur 1 zeigt ein Fahrzeug mit einer ersten Einheit 10, die als Akkumulator ausgeführt ist. In dieser Version weist das Fahrzeug einen reinen Elektroantrieb auf. Das Ausführungsbeispiel ist gekennzeichnet durch die folgenden Merkmale
- 1: Akkumulator im Tunnel
- 2: Wahlweise zweiter Akkumulator im Motorraum
- 3: Plug-In Hybrid 220/380 V

Zu beachten ist, dass Akkumulator aus fahrdynamischen Gründen vorzugsweise zwischen beiden Achsen angeordnet ist.

Figur 2 zeigt das Fahrzeug der Figur 1, nun aber mit einer zweiten Einheit 20, welche auch "Range Extender" genannt werden kann. Die Einheit 20 umfasst einen Verbrennungsmotor VKM bzw. eine Brennstoffzelle, einen Generator und eine Leistungselektronik. Es besteht keine direkte Koppelung zwischen VKM/ Brennstoffzelle und den Rädern 30 des Fahrzeugs)

Auf folgende Merkmale wird in Bezug auf Figur 2 hingewiesen:
- 1: Akkumulator im Tunnel
- 2: Austausch eines Energiespeichers durch die Baueinheit "Range-Extender" mit "Verbrennungskraftmaschine, Generator und Leistungselektronik / Brennstoffzelle / Brennstoffzelle und Elektromotor"
- 3: Erhöhen der Reichweite durch nachträglichen Einbau der Baueinheit "Range-Extender" mit "Verbrennungskraftmaschine, Generator und Leistungselektronik / Brennstoffzelle / Brennstoffzelle und E-Motor"
- 4: Plug-In Hybrid 220/380 V

## Patentansprüche

1. Fahrzeug mit einem Antriebsstrang, der einen Verbrennungsmotor, eine E-Maschine, die als Generator, Elektromotor und als Primärantrieb einsetzbar ist, und ein Getriebe aufweist, wobei das Getriebe eine erste Getriebestufe iₗ und eine der ersten Getriebestufe iₗ nachgeschaltete zweite Getriebestufe iₗₗ, ein Differential zum Drehzahlausgleich bei Kurvenfahrt, eine erste Kupplung (K1) und eine zweite Kupplung (K2) umfasst, wobei
- die erste Kupplung (K1) in einer offenen Stellung den Verbrennungsmotor von der ersten Getriebestufe iₗ und der E-Machine getriebetechnisch trennt; und
- die zweite Kupplung (K2) in einer offenen Stellung den Verbrennungsmotor und die E-Maschine von der ersten Getriebestufe iₗ getriebetechnisch trennt.

2. Fahrzeug nach Anspruch 1, **dadurch gekennzeichnet, dass** das Getriebe eine erste Welle mit einem ersten Zahnrad und eine zu ersten Welle parallele zweite Welle mit einem zweiten Zahnrad aufweist, wobei die erste Getriebestufe iₗ durch einen kämmenden Eingriff des erstes Zahnrads mit dem zweiten Zahnrad gebildet ist.

3. Fahrzeug nach Anspruch 2, **dadurch gekennzeichnet, dass** das Differential einen drehbaren Differentialkäfig aufweist, wobei die zweite Getriebestufe iₗₗ durch den kämmenden Eingriff des zweiten Zahnrads mit dem drehbaren Differentialkäfig gebildet ist.

4. Fahrzeug nach Anspruch 2 oder 3, **dadurch gekennzeichnet, dass** die zweite Getriebestufe iₗₗ mindestens zwei schaltbare Gänge aufweist.

5. Fahrzeug nach einem der Ansprüche 1 bis 4, **dadurch gekennzeichnet, dass** eine Drehachse der E-Maschine, eine Drehachse des Verbrennungsmotors und die erste Welle koaxial angeordnet sind.

6. Fahrzeug nach Anspruch 5, **dadurch gekennzeichnet, dass** die erste Kupplung (K1) und die zweite Kupplung (K2) koaxial zur Drehachse des Verbrennungsmotors angeordnet sind.

7. Fahrzeug nach einem der Ansprüche 1 bis 6, **dadurch gekennzeichnet, dass** eine Getriebestufe zwischen der E-Maschine, die im Betrieb höhere Drehzahlen als der Verbrennungsmotor erreichen kann, und der ersten Welle vorgesehen ist,

8. Fahrzeug nach einem der Ansprüche 1 bis 7, **dadurch gekennzeichnet, dass** die erste Kupplung als Einscheiben-Trockenkupplung und die zweite Kupplung als nasslaufende Kupplung ausgebildet sind.

9. Verfahren zum Betrieb des Fahrzeugs nach einem der Ansprüche 1 bis 8, wobei
- in einem Betriebszustand "Elektromotorisch fahren" für einem Modus "Zug" und für einem Modus "Rekuperieren" die erste Kupplung (K1) geöffnet und die zweite Kupplung (K2) geschlossen werden,
- in einem Betriebszustand "Verbrennungsmotorisch fahren" für den Modus "Zug" und beide Kupplungen (K1, K2) geschlossen werden und für den Modus "Rekuperieren" die erste Kupplung (K1) geöffnet und die zweite Kupplung (K2) geschlossen werden,
- in einem Betriebszustand "Boosten durch Verbrennungsmotor" beide Kupplungen (K1, K2) geschlossen werden,
- in einem Betriebszustand "Laden eines Akkumulators über Verbrennungsmotor" für einen Modus "parallel zum verbrennungsmotorischem Fahren" beide Kupplungen (K1, K2) geschlossen werden und für einen Modus "bei stehendem Fahrzeug" die erste Kupplung (K1) geschlossen und die zweite Kupplung (K2) geöffnet werden.
